(19) Europäisches Patentamt / European Patent Office / Office européen des brevets

(11) **EP 2 602 599 A1**

(12) **DEMANDE DE BREVET EUROPEEN**

(43) Date de publication:
**12.06.2013 Bulletin 2013/24**

(51) Int Cl.:
*G01J 5/20* (2006.01)     *G01J 5/08* (2006.01)

(21) Numéro de dépôt: **12194154.6**

(22) Date de dépôt: **26.11.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **09.12.2011 FR 1161425**

(71) Demandeur: **COMMISSARIAT A L'ENERGIE ATOMIQUE ET AUX ENERGIES ALTERNATIVES 75015 Paris (FR)**

(72) Inventeurs:
• **N'Guyen, Duy Thong 38600 FONTAINE (FR)**
• **Meilhan, Jérome 38000 GRENOBLE (FR)**
• **Ouvrier-Buffet, Jean-Louis 74320 SEVRIER (FR)**
• **Simoens, François 38640 CLAIX (FR)**

(74) Mandataire: **Vuillermoz, Bruno et al Cabinet Laurent & Charras "Le Contemporain" 50, Chemin de la Bruyère 69574 Dardilly Cédex (FR)**

(54) **Détecteur bolométrique d'un rayonnement électromagnétique dans le domaine du térahertz**

(57) Ce détecteur bolométrique d'un rayonnement électromagnétique térahertz, comprend au moins un micropont bolométrique suspendu au dessus d'un support.
Le micropont comprend :
■ des moyens de collecte du rayonnement pour collecter le rayonnement électromagnétique; comprenant au moins une paire d'antennes (112a, 112b, 112c, 112d) ;
■ des moyens résistifs en couplage résistif avec les moyens de collecte, comprenant une charge résistive individuelle (114a, 114b, 114c, 114d) en couplage résistif avec chaque antenne (112a, 112b, 112c, 112d);
■ des moyens thermométriques en couplage thermique avec les moyens résistifs, électriquement isolés des moyens de collecte et des moyens résistifs.

Fig. 9

Printed by Jouve, 75001 PARIS (FR)

**Description**

**DOMAINE DE L'INVENTION**

La présente invention a trait au domaine des détecteurs bolométriques à antenne, et plus particulièrement aux détecteurs à antennes filaires ou papillons, destinés à la détection d'un rayonnement électromagnétique dans la gamme du térahertz.

La détection dans la gamme du térahertz, c'est-à-dire dans la gamme de fréquences comprises entre 100 gigahertz et 10 térahertz, présente de nombreuses applications.

De façon non limitative, il est ainsi possible de citer :

- ■ le diagnostic médical, pour lequel la détection dans le domaine du térahertz autorise l'accès à des détails de structure anatomique et les réactions chimiques qui s'y produisent, que ne fournissent ni les rayons X, ni les ultra-sons ;
- ■ le domaine militaire et la sécurité aérienne, avec par exemple la réalisation de radars anti-furtivité ou de radars haute résolution permettant de faire de la discrimination ;
- ■ l'étude et la détection de la pollution atmosphérique, l'observation en ondes submillimétriques fournissant en effet des informations importantes sur la chimie atmosphérique et permettant ainsi un suivi inégalé des polluants atmosphériques, comme par exemple le trioxyde d'azote, qui est difficilement détectable par les techniques classiques car présentant de fortes raies d'absorption dans l'infrarouge lointain ;
- ■ l'identification d'espèces chimiques, de nombreux composés chimiques complexes ayant une signature dans la gamme terahertz suffisamment univoque pour permettre leur détection de manière certaine, comme par exemple certains explosifs et produits toxiques, certains composés issus de la maturation des fruits ou encore, certains composés issus de la combustion industrielle ;
- ■ l'analyse de phénomènes moléculaires ou atomiques, la spectroscopie térahertz permettant d'obtenir de nouvelles informations sur des mécanismes comme la photoexcitation, la photodissociation et la solvatation. Il en va de même pour l'analyse d'interactions moléculaires (états vibratoires des molécules ou des liaisons hydrogène par exemple), de systèmes à phase condensée, de processus dynamiques dans des grosses molécules, telles que les peptides et les protéines, ou encore l'observation de l'orientation des polymères avec une technique basée sur le rayonnement térahertz ;
- ■ l'étude des propriétés des matériaux, comme les semi-conducteurs, pour déterminer de manière non destructive, par exemple leur mobilité, la dynamique de porteurs ultra-rapides et les interactions porteurs-phonons, les supraconducteurs, les polymères, les céramiques, les matériaux organiques et les matériaux poreux. De plus, des matériaux tels que les plastiques, le papier et les textiles sont transparents dans la gamme térahertz, et en revanche, les métaux sont de parfaits réflecteurs et l'eau possède un grand pouvoir absorbant. Ainsi, la détection dans cette gamme est particulièrement adaptée à l'inspection de produits emballés ou au contrôle de procédés de fabrication in situ et en temps réel par exemple ; et
- ■ la télécommunication large bande, la course à des débits d'information toujours plus élevés, autant sur terre qu'entre satellites, poussant les industriels à développer des systèmes fonctionnant à des fréquences qui atteignent aujourd'hui plusieurs centaines de gigahertz, voire demain plusieurs térahertz.

**ETAT DE LA TECHNIQUE**

Usuellement, un détecteur bolométrique résistif mesure la puissance d'un rayonnement incident dans la gamme infrarouge. Il comprend à cet effet un élément résistif absorbant, qui convertit le flux lumineux en flux calorifique, ce qui engendre une élévation de température dudit élément par rapport à une température de référence. Cette augmentation de température induit alors une variation de la résistance électrique de l'élément thermométrique, provoquant des variations de tension ou de courant aux bornes de celui-ci. Ces variations électriques constituent le signal délivré par le capteur.

Toutefois, la température de l'élément absorbant est usuellement dépendante en grande partie de l'environnement de celui-ci, et notamment de la température du substrat qui comprend le circuit électronique de lecture. Afin d'insensibiliser au maximum l'élément absorbant de son environnement, et ainsi augmenter la sensibilité du détecteur, l'élément absorbant est généralement isolé thermiquement du substrat.

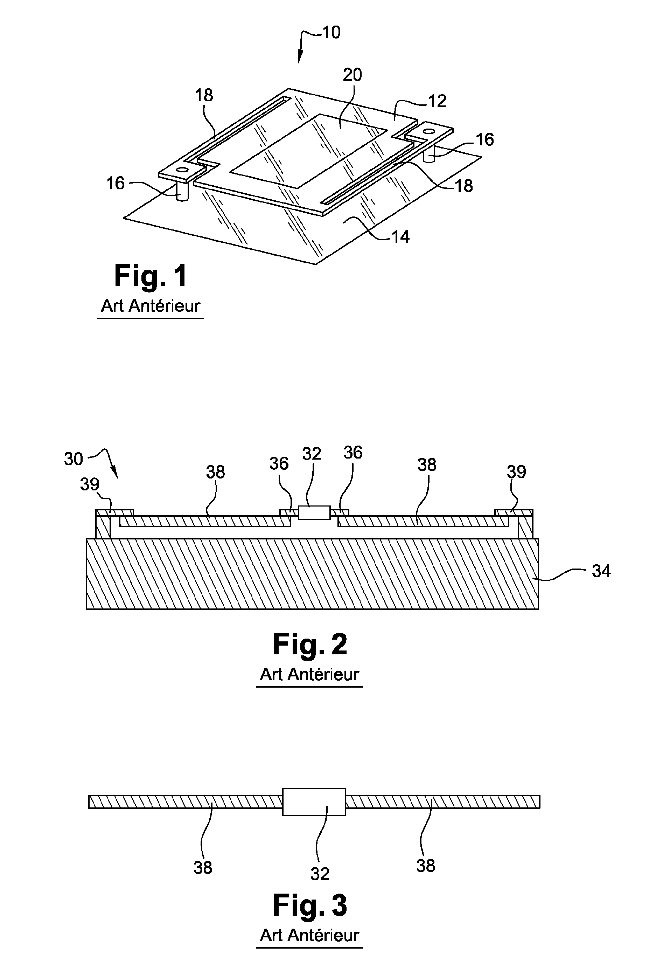

La figure 1 est une vue schématique en perspective d'un détecteur bolométrique résistif élémentaire **10** de l'état de la technique illustrant ce principe d'isolation thermique. Ce détecteur élémentaire, se présentant dans l'exemple décrit sous la forme d'une membrane suspendue, fait classiquement partie d'une matrice de détecteurs élémentaires à une ou deux dimensions.

Le détecteur **10** comporte une fine membrane **12** absorbant le rayonnement incident, suspendue au dessus d'un substrat - support **14** par l'intermédiaire de deux clous d'ancrage conducteurs **16,** auxquels ladite membrane est fixée par deux bras d'isolation thermique **18.** La membrane **12** comprend usuellement un empilement d'une couche diélectrique et d'une couche métallique. La couche métallique assure la fonction d'absorption et la couche diélectrique isole électriquement la couche métallique de l'élément thermométrique.

Une couche mince **20** de matériau thermométrique résistif est par ailleurs déposée au centre de la membrane **12,** notamment une couche réalisée en un matériau semi-conducteur, tel que du silicium polycristallin ou amorphe de type p ou n faiblement ou fortement résistif, ou bien un oxyde de vanadium ($V_2O_5$, $VO_2$) élaboré dans une phase semi-conductrice.

Enfin, le substrat - support **14** comprend un circuit électronique intégré sur une plaquette de silicium, usuellement connu sous l'expression « circuit de lecture ». Le circuit de lecture comporte d'une part les éléments de stimuli et de lecture de l'élément thermométrique **20,** et d'autre part les composants de multiplexage qui permettent de sérialiser les signaux issus des différents éléments thermométriques présents dans le détecteur matriciel.

En fonctionnement, la membrane **12** s'échauffe sous l'effet d'un rayonnement électromagnétique incident et la puissance calorifique produite est transmise à la couche **20** de matériau thermométrique. Périodiquement, le circuit de lecture agencé dans le substrat **14** polarise l'élément thermométrique **20** en soumettant les clous **16** à une tension de polarisation, et recueille le courant circulant dans l'élément thermométrique **20** pour en déduire une variation de sa résistance et donc le rayonnement incident à l'origine de ladite variation.

L'agencement et le fonctionnement d'un tel détecteur étant classique, il ne sera pas expliqué plus en détail pour des raisons de concision. Il doit cependant être noté que la membrane **12** remplit, outre la fonction d'isolation thermique, trois fonctions principales : celle d'antenne pour la réception du rayonnement, celle de conversion de la puissance électromagnétique réceptionnée en puissance calorifique, et celle de mesure thermométrique de la puissance calorifique produite. Remplissant le rôle d'antenne, les dimensions de la membrane **12** sont en conséquence sélectionnées pour être du même ordre de grandeur que la longueur d'onde du rayonnement destiné à être mesuré.

Or, dans le domaine du térahertz, les longueurs d'onde peuvent atteindre le millimètre, ce qui nécessite donc une membrane du même ordre de grandeur. Toutefois, pour de telles dimensions, la masse calorifique, la tenue mécanique et les pertes par rayonnement de la membrane sont si problématiques qu'elles nuisent in fine à l'efficacité du détecteur. Notamment, une grande capacité calorifique induit un temps de réponse élevée du détecteur. Le renforcement de la tenue mécanique n'est pas non plus une solution satisfaisante dans la mesure où un bras d'isolation thermique épais dégrade l'isolation thermique et donc la sensibilité du détecteur.

C'est pourquoi, pour une telle gamme de fréquences, la fonction de réception du rayonnement est découplée des autres fonctions. La fonction de réception est ainsi assurée par une antenne plane, et la fonction de conversion de la puissance électromagnétique en puissance calorifique est quant à elle assurée par la charge résistive de l'antenne. Les dimensions de la charge satisfont classiquement aux conditions d'adaptation d'impédance qui dépendent de la géométrie de l'antenne et de la nature des couches la supportant, afin d'obtenir une conversion optimale. La charge résistive est par ailleurs en contact thermique avec un élément thermométrique pour la mesure de la puissance calorifique produite. L'ensemble constitue alors un bolomètre à antenne.

Le document US 2006/0231761, dont les figures 2 et 3a sont reproduites respectivement aux figures 2 et 3, décrit un bolomètre à antenne **30** comprenant un élément thermométrique **32** connecté à une antenne **38** de type dipolaire via une charge résistive **36.** L'ensemble formé de l'antenne, de la charge et du thermomètre est suspendu au dessus d'un substrat **34** au moyen de bras d'isolation thermique **39.** Le flux térahertz incident est ainsi capté par l'antenne dipolaire **38,** qui convertit ce flux en courants surfaciques hyperfréquences, les courants produits induisant en retour l'échauffement de la charge résistive **36,** et donc de l'élément thermométrique **32.**

Ce type de bolomètre à antenne présente cependant deux inconvénients. Tout d'abord, les branches de l'antenne sont séparées par le bolomètre. Or, l'efficacité d'absorption d'un bolomètre à antenne est maximale lorsque l'impédance de la charge résistive est « adaptée » à l'impédance de l'antenne. Plus particulièrement, l'impédance d'une antenne comporte une partie réelle, la résistance, et une partie imaginaire, la réactance, qui sont variables en fonction de la fréquence du courant parcourant l'antenne. Il existe une fréquence particulière, dite « fréquence de résonnance », pour laquelle la résistance est maximale et la réactance est nulle. Le couplage résistif entre l'antenne et un élément résistif, et donc l'efficacité d'absorption du bolomètre, est optimal lorsque la résistance de l'élément résistif est choisie égale à la résistance de l'antenne pour la fréquence de résonnance, soit généralement une valeur de résistance à la fréquence de résonnance comprise entre 100 et 300 Ohms.

Or dans l'architecture décrite ci-dessus, la charge résistive est elle-même couplée à l'élément thermométrique, de sorte que l'élément résistif global « vu » par l'antenne est la combinaison de la charge résistive et du bolomètre. Il convient donc dans ce cas de prévoir un bolomètre dont la résistance soit « compatible » avec la résistance de l'antenne. Toutefois, les matériaux bolométriques efficaces pour la détection thermométrique à température ambiante ont usuellement une résistance supérieure à la centaine de $k\Omega$, voire même supérieure au $M\Omega$, de sorte que l'adaptation d'impédance avec l'antenne est très faible pour ceux-ci. En outre, quand bien même un bolomètre (par exemple, de type supraconducteur) aurait une résistance « compatible » avec celle de l'antenne, le principe même d'un bolomètre est de voir sa résistance varier avec la température. Par conséquent, pour la définition même du bolomètre, il est impossible d'avoir une adaptation d'impédance optimale pour toutes les températures observées avec ce type d'architecture.

Un autre inconvénient résultant de cette architecture réside dans le fait qu'elle détecte un rayonnement selon un axe unique de polarisation, et qu'elle est par conséquent très sensible à la polarisation du rayonnement incident. Pour détecter un rayonnement incident de polarisation quelconque, il convient donc de définir au moins deux axes de polarisation différents, avantageusement orthogonaux. Or, l'intégration d'une deuxième antenne dipolaire, d'axe de polarisation différent de la première antenne, dans le bolomètre à antenne du document US 2006/0231761 est très difficile sans dégrader fortement les performances du détecteur, du fait de la présence des bras d'isolation thermique.

Usuellement, deux catégories d'antennes sont utilisés pour obtenir une détection bipolaire, à savoir d'une part des antennes de polarisation circulaire, comme par exemple les antennes en spirale, et d'autre part un système de deux antennes croisées sensibles respectivement à deux polarisations rectilignes orthogonales, comme deux antennes papillons, dites « *double bowties* », deux antennes de type bâtons croisées, dites « double dipôles ».

Pour la seconde catégorie, afin d'obtenir une détection égale selon les deux axes de polarisation, les antennes croisées doivent être symétriques pour les deux polarisations orthogonales, ce qui signifie que la taille physique des antennes doit être identique quelle que soit la polarisation.

Or, ceci est difficile avec une membrane bolométrique telle que décrite en relation avec la figure 1. En effet, dans l'hypothèse où les antennes sont placées sur la membrane suspendue, les bras thermiques **18,** qui isolent thermiquement les antennes et l'élément thermométrique, imposent une limite sur la longueur géométrique de l'antenne dans l'une des deux directions de polarisation puisque l'antenne ne doit pas traverser les deux bras d'isolation thermique sous peine de fortement dégrader l'isolation thermique. Aussi cette contrainte de symétrie de l'antenne bi-polaire impose une taille maximale de l'antenne égale à la distance entre les deux bras thermiques. Cette approche technologique dégrade donc l'avantage de réaliser un détecteur bolométrique où une grande antenne pour coupler l'onde submillimétrique est associée une petite membrane bolométrique. En effet, la taille physique de l'antenne est toujours plus petite que la taille de la planche bolométrique. Cette situation est incompatible avec la détection dans le domaine spectral qui requiert des grandes antennes pour un couplage efficace.

Pour pallier cette limitation de taille imposée par les bras d'isolation thermique, une solution consiste à déporter au moins l'une des antennes hors de la membrane suspendue, par exemple sur le support au dessus duquel cette dernière est suspendue, et de prévoir un mécanisme de couplage qui transfère la puissance électromagnétique réceptionnée par la ou les antennes déportée(s) à la membrane suspendue par un mécanisme de couplage capacitif.

Une telle solution est par exemple décrite dans le document US 2010/276597. En se référant aux figures 4 et 5, ce document décrit un bolomètre **40** qui comporte un substrat isolant **42** sur lequel est déposée une première antenne papillon **56.** Un micropont **50** est suspendu au dessus du substrat **42** par des bras de soutien et d'isolation thermique **54.** Une seconde antenne papillon **44,** croisée avec la première antenne **56,** est par ailleurs formée sur le micropont **50** et est en couplage résistif avec une couche conductrice **66** de celui-ci. Des ailettes **68, 70, 72,** réalisées dans le même matériau que celui de l'antenne **44,** sont également prévues sur la couche conductrice **66** avec des surfaces en regard de la première antenne papillon **56.** Les ailettes **68, 70, 72** sont donc en couplage capacitif avec l'antenne déportée **56.** Une couche de matériau thermométrique **74** est par ailleurs déposée sur un couche d'isolant **76** en contact avec la couche conductrice **66.**

Une partie du flux optique incident est donc collectée par l'antenne déportée **56,** ce qui génère des courants de surfaces dans celle-ci. Par effet capacitif, ces courants de surface se couplent avec les ailettes **68, 70, 72.** Ces dernières constituent donc des petites antennes dans le micropont **50.**

Toutefois, le couplage capacitif est par nature moins performant qu'un couplage résistif en raison d'une absence d'adaptation optimale. En effet, en utilisant un couplage capacitif entre une antenne déportée « primaire », et une antenne « secondaire » dans le micropont, la valeur de la capacité formée entre les antennes primaire et secondaire s'ajoute à la réactance de l'antenne primaire. Cette réactance n'étant plus nulle à la fréquence de résonnance, le couplage capacitif est donc moins performant qu'un couplage résistif avec une charge d'impédance adaptée. En outre, la capacité du couplage capacitif entre l'antenne primaire **56** et les antennes secondaires **68, 70, 72** variant en fonction de la fréquence, la capacité étant décroissante en fonction de la fréquence, l'adaptation d'impédance n'est pas constante, et notamment se dégrade à mesure que la fréquence diminue.

Un autre inconvénient du couplage capacitif est qu'il requiert une surface de l'antenne secondaire importante pour être un minimum efficace. En effet, l'intensité du couplage capacitif est proportionnelle aux surfaces métalliques en vis-à-vis, ce qui implique donc d'augmenter la masse thermique du micropont de manière importante, et par conséquent de dégrader le temps de réponse de détecteur.

**EXPOSE DE L'INVENTION**

Le but de la présente invention est de proposer un détecteur dans le domaine du térahertz à base de bolomètres à antennes, capable de détecter selon deux axes de polarisations sans avoir recours à du couplage capacitif.

A cet effet, l'invention a pour objet un détecteur bolométrique d'un rayonnement électromagnétique térahertz, comprenant au moins un micropont bolométrique suspendu au dessus d'un support par des bras de soutien et d'isolation thermique, le micropont comprenant:

■ des moyens de collecte de rayonnement pour collecter le rayonnement électromagnétique ;
■ des moyens résistifs, en couplage résistif avec les moyens de collecte, pour convertir la puissante électromagnétique collectée par ceux-ci en puissance calorifique; et
■ des moyens thermométriques, en couplage thermique avec les moyens résistifs, pour s'échauffer sous l'effet de la puissance calorifique produite par ceux-ci.

Selon l'invention :

■ les moyens de collecte comprennent au moins une paire d'antennes ayant:

○ une première antenne apte à collecter le rayonnement selon un premier axe de polarisation; et
○ une deuxième antenne apte à collecter le rayonnement selon un deuxième axe de polarisation, différent du premier axe de polarisation;

■ les moyens résistifs comprennent une charge résistive individuelle en couplage résistif avec chaque antenne ;
■ et les moyens thermométriques sont électriquement isolés des moyens de collecte et des moyens résistifs.

En d'autres termes, les antennes sont chacune en couplage résistif avec une charge résistive qui est électriquement isolée de l'élément thermométrique. Comme l'élément thermométrique est isolé électriquement d'une antenne et de sa charge, le courant hyperfréquence induit par l'absorption du rayonnement est limité seulement à celle-ci, de sorte que l'adaptation d'impédance est réalisée uniquement entre l'impédance de l'antenne et la résistance de la charge résistive, sans influence de celle de l'élément thermométrique. Comme une résistance comprise entre 100 et 300 Ohms est réalisable, par exemple en dimensionnant la taille de la charge de manière appropriée, l'adaptation de l'impédance peut être optimale pour chaque antenne. Il s'en suit, notamment, que la variation de la résistance du thermomètre ne cause aucun effet sur le fonctionnement de l'antenne puisque le thermomètre est isolé électriquement de l'antenne par une couche d'isolant.
Selon un mode de réalisation, la première et la deuxième antennes sont des antennes du type dipôle filaire.
Les antennes filaires sont bien connues de l'état de la technique. On entend généralement par « antenne filaire », un élément mince et allongé, ou « filiforme », de section sensiblement constante, notamment réalisé sous la forme d'une bande ou d'un barreau sensiblement rectiligne, par exemple de section rectangulaire.
Selon un mode de réalisation, la première et la deuxième antennes sont en contact électrique l'une avec l'autre, ce qui permet d'augmenter la longueur électrique de chacune des antennes en modifiant l'impédance électrique de chacune d'entre elles.
Selon un mode de réalisation, la première et la deuxième antennes comportent chacune deux portions en contact avec une charge résistive. Plus particulièrement, les antennes sont dipolaires, par exemple de type filaire ou papillon.
Selon un mode de réalisation, chaque charge résistive a une valeur de résistance sensiblement égale à la valeur de l'impédance de l'antenne à laquelle elle est couplée pour une fréquence de résonnance de l'antenne, de sorte qu'une adaptation d'impédance optimale est réalisée pour chaque antenne.
Selon un mode de réalisation, les longueurs des première et deuxième antennes selon leur axe de polarisation respectif sont sensiblement égales.
Selon un mode de réalisation, le micropont comporte une membrane suspendue au dessus du support par lesdits bras, et au moins une antenne dont l'axe de polarisation ne traverse pas les bras d'isolation thermique comporte une portion s'étendant hors de ladite membrane. Ainsi, les longueurs des première et deuxième antennes selon leur axe de polarisation respectif ne sont pas égales. L'antenne qui s'étend hors de la membrane suspendue présente ainsi une longueur supérieure à celle de l'antenne entièrement supportée par la membrane.
Selon un mode de réalisation, la première et la deuxième antennes sont chacune déposées sur une couche résistive, une antenne et la couche résistive sur laquelle elle est déposée étant encapsulée dans un matériau électriquement isolant, et les moyens thermométriques comprennent un élément en matériau thermométrique déposé sur le matériau isolant d'encapsulation.
Selon un mode de réalisation, le micropont comporte deux paires d'antennes.
Selon un mode de réalisation, les premier et deuxième axes de polarisation sont perpendiculaires.

**BREVE DESCRIPTION DES FIGURES**

L'invention sera mieux comprise à la lecture de la description qui suit, donnée uniquement à titre d'exemple, et réalisée en relation avec les dessins annexés, dans lesquels des références identiques désignent des éléments identiques ou analogues, et dans lesquels :

■ la figure 1 est une vue schématique en perspective d'un détecteur bolométrique élémentaire de l'état de la technique, déjà décrite ci-dessus;
■ les figures 2 et 3 sont des vues schématiques respectivement en coupe et de dessus des antennes d'un bolomètre à antennes selon l'état de la technique, déjà décrites ci-dessus ;

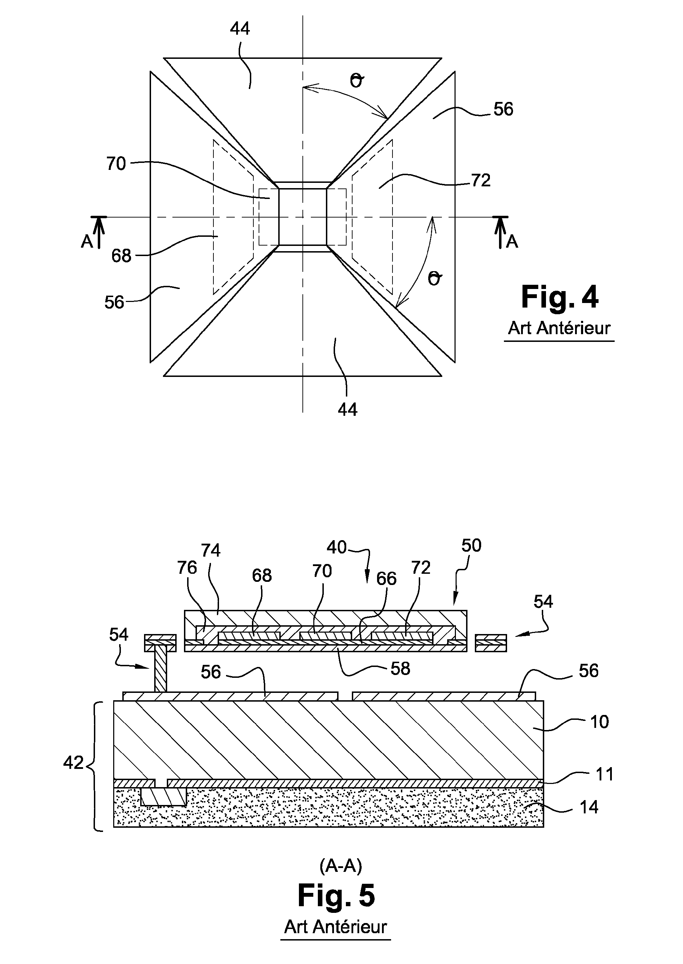

■ la figure 4 est une vue en coupe schématique de dessus des antennes d'un bolomètre à antennes selon l'état de la technique, déjà décrite ci-dessus ;

■ la figure 5 est une vue schématique en coupe du bolomètre à antenne de l'état de la technique de la figure 4, selon le plan A-A de celle-ci ;

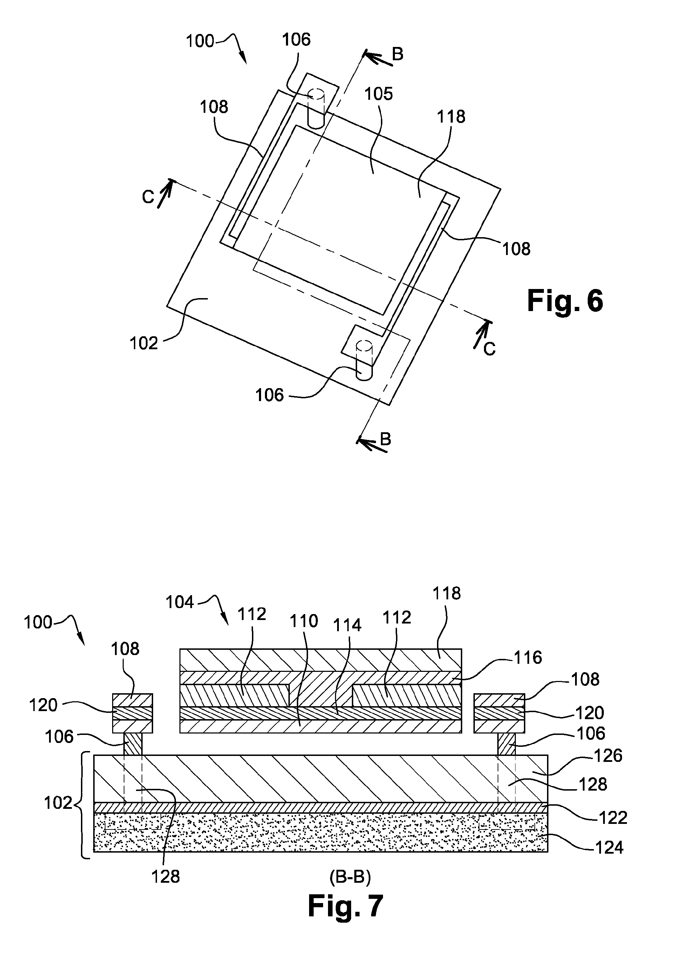

■ la figure 6 est une vue schématique en perspective d'un bolomètre à antenne selon l'invention ;

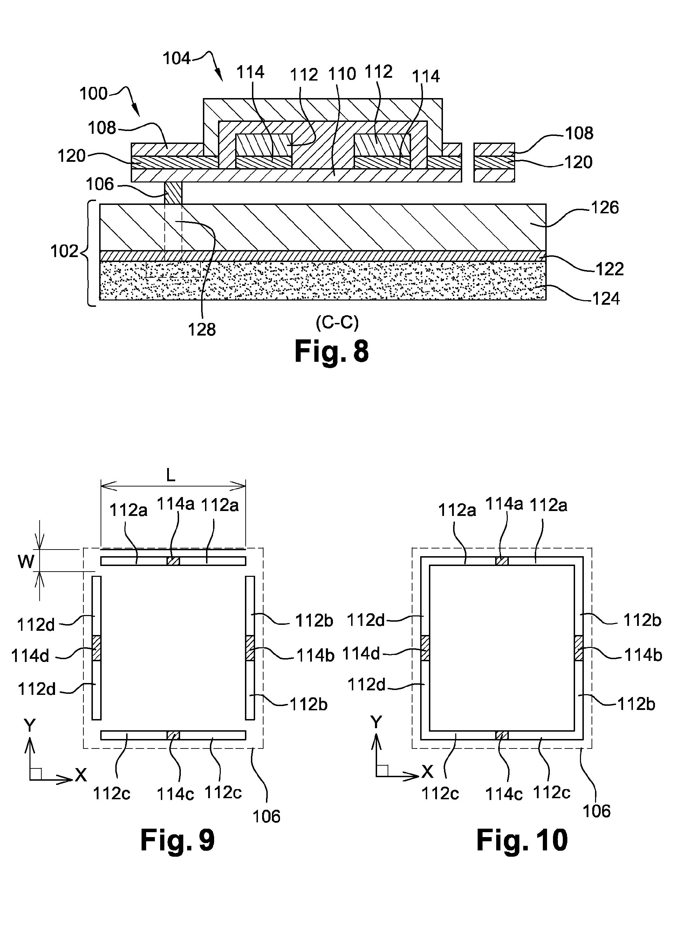

■ les figures 7 et 8 sont des vues schématiques en coupe du détecteur de la figure 6, et correspondant respectivement à des sections selon les plans B - B et C - C de la figure 6 ;

■ les figures 9, 10 et 11 sont des vues schématiques de dessus de différentes variantes d'antennes et de charges résistives entrant dans la constitution du bolomètre à antenne selon l'invention ; et

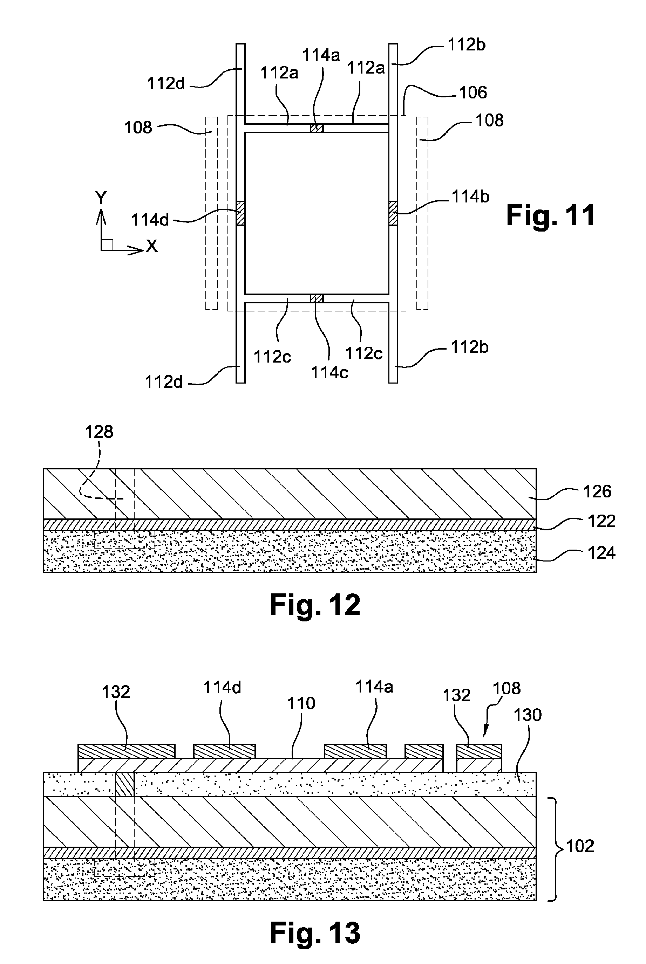

■ les figures 12 à 16 sont des vues en coupe selon le plan C - C de la figure 6, illustrant un procédé de fabrication d'un bolomètre selon l'invention.

## DESCRIPTION DETAILLEE DE L'INVENTION

En se référant aux figures 6 à 8, il est illustré un détecteur bolométrique élémentaire **100** selon l'invention, constitutif d'une matrice de détecteurs élémentaires, pour la détection dans une gamme du rayonnement térahertz.

Le bolomètre **100** comporte un support **102,** et un micropont **104** suspendu au dessus du support **102** par deux clous d'ancrage conducteurs **106.**

Le micropont **104** est formé d'une partie centrale **105** et de deux bras d'isolation thermique et de conduction électrique **108,** raccordant la partie centrale **105** aux clous d'ancrage **106.** Le micropont **104** comporte une première couche d'isolant électrique **110,** comme par exemple du $SiO_2$, du SiO, du SiN, du ZnS ou autres, d'une épaisseur comprise entre par exemple entre 0,5 nanomètre et 0,5 micromètre. Cette couche **110** assure la rigidité mécanique du micropont **104.** Dans la partie centrale **105** du micropont **104,** il repose sur cette couche **110** un ensemble d'antennes **112** pour la réception du rayonnement électromagnétique selon au moins deux polarisations différentes, ainsi qu'un ensemble de charges résistives individuelles **114** pour la conversion de la puissance électromagnétique réceptionnée par les antennes en puissance calorifique.

Plus particulièrement, les charges résistives individuelles **114** sont réalisées sous la forme de motifs métalliques distincts les uns de autres, avantageusement gravés dans une couche d'une épaisseur comprise entre 5 nanomètres et 50 nanomètres, par exemple en Ti, en TiN, en Pt, en NiCr ou autres, déposée sur la couche d'isolant électrique **110.** Les antennes **112** sont en contact de ces motifs, présentent une épaisseur comprise entre 100 nanomètres et 500 nanomètres, de préférence plus épaisse que l'épaisseur de peau du matériau à la fréquence de travail, et sont par exemple constituées d'aluminium, de siliciure de tungstène, de titane ou autres. Bien entendu, il importe que les charges résistives **114** soient au contact des antennes **112,** sans que l'ordre d'empilement soit important. Ainsi, les antennes peuvent être déposées sur les charges résistives **114** ou inversement.

La figure 9 illustre une première variante, vue de dessus, des antennes et de leurs charges résistives respectives. Quatre antennes dipolaires distinctes **112a - 112d** identiques, sous la forme de bandes ou de barreaux, sont prévues, par exemple en bordure de la partie centrale **105** du micropont **104,** deux antennes **112a, 112c** étant agencées selon un première axe de polarisation X et les deux autres antennes **112b, 112d** étant agencées selon un deuxième axe de polarisation Y, orthogonal au premier axe X. Chacune des antennes **112a - 112d** comporte deux branches formées sur une charge résistive individuelle **114a - 114d,** par exemple réalisée sous la forme d'une bande métallique, dont les dimensions sont choisies pour réaliser une adaptation d'impédance optimale avec son antenne respective, c'est-à-dire dont les dimensions sont choisies pour que la résistance de la charge résistive soit sensiblement égale à la résistance de l'antenne pour la fréquence de résonnance de celle-ci. Seule la partie de la charge individuelle **114a-114d** sensiblement située entre les deux branches de l'antenne dipolaire détermine la résistance de cette charge.

Plus particulièrement, la résistance par carrée $R_s$ (« *sheet resistance* » en anglais) d'une charge est déterminée essentiellement par son épaisseur, et cette valeur combinée avec la taille de la charge détermine la valeur de résistance de la charge, de l'ordre de 50 à 200 Ohms. Pour une charge résistive rectangulaire de longueur L et de largeur W, la résistance R de la charge résistive est égale à :

$$R = R_s \frac{L}{W}$$

En se référant à nouveau aux figures 6 à 8, le micropont **104** comprend une deuxième couche d'isolant électrique **116,** par exemple une couche de SiN, de SiO ou de ZnS, d'une épaisseur comprise entre 5 nanomètres et 100 nanomètres, déposée sur les antennes **112** et les charges résistives **114,** ainsi qu'une couche de matériau bolométrique **118** déposée sur la deuxième couche d'isolant électrique **116** et en contact électrique avec une couche conductrice **120** des bras d'isolation thermique **108.** Les antennes **112** et les charges résistives **114** sont donc encapsulés dans du matériau isolant **110, 116** et isolées électriquement du matériau bolométrique **118.**

Le matériau bolométrique est par exemple un semi-conducteur amorphe ou polycristallin, tel que du Si, du Ge, du SiC, du a-Si :H, du a-SiGe :H, un matériau métallique ou encore un oxyde de vanadium ou un oxyde de magnétite. Ce matériau doit présenter un coefficient en température (TCR pour « *temperature coefficient resistance* ») non nul. En d'autres termes, il présente une résistance qui varie en fonction de la température.

Le support **102** comporte quant à lui un réflecteur **122**, disposé sur un circuit de lecture **124**, comme par exemple une couche d'aluminium, et une couche **126** de matériau isolant, présentant avantageusement un coefficient d'absorption le plus faible possible dans la gamme de longueurs d'onde de fonctionnement du détecteur, par exemple un couche de SiO, de SiO$_2$, de SiN, de Ta$_2$O$_5$, de Ta$_2$O$_5$-TiO$_2$, de HfO$_2$, de SrTiO$_3$, de Ba$_{1-x}$Sr$_x$TiO$_3$ ou d'un mélange de ceux-ci. La couche **126** a par ailleurs une épaisseur $e$ réglée à la valeur :

$$e = \frac{\lambda}{4n}$$

où :

■ $\lambda$ est une longueur d'onde de la gamme de fonctionnement du détecteur, par exemple la longueur d'onde centrale de cette gamme ; et

■ $n = \sqrt{\varepsilon}$ $\varepsilon$ étant la permittivité diélectrique du matériau constitutif de la couche **126.**

Une cavité résonnante est ainsi obtenue pour le rayonnement térahertz objet de la détection.

La couche **126** est par ailleurs traversée par des connexions électriques **128,** dans le prolongement des clous d'ancrage conducteur **106,** de manière à relier électriquement le circuit de lecture **124** et l'élément thermométrique **118.**

La figure 10 illustre une deuxième variante des antennes et de leurs charges résistives respectives. Dans cette variante, chaque branche d'une antenne selon un axe de polarisation est contact électrique avec la branche adjacente d'une antenne associée à l'autre axe de polarisation. Ceci permet d'augmenter la longueur électrique de chaque antenne.

La figure 11 illustre une troisième variante analogue à la deuxième variante, à la différence des antennes **112b, 112d** parallèles aux bras d'isolation thermique **108** qui s'étendent au-delà de la partie centrale **105** suspendue.

Pour la direction **Y** parallèle à la direction des bras d'isolation thermique, ces structures se comportent donc comme deux antennes de type dipôle classiques qui sont mises en parallèle. Dans cette direction, la longueur des antennes **112b, 112d** n'est pas limitée par les deux bras thermiques **108.** Notamment, les antennes **112b, 112d** peuvent donc dépasser la planche bolométrique **106** et être suspendue au-dessus du support **102.** La longueur d'onde de détection $\lambda$ des antennes **112b, 112d**, et donc du détecteur, selon la polarisation **Y** est alors réglée par la longueur géométrique L des antennes **112b, 112d** selon la relation $\lambda = 2 \times L$.

Dans la direction **X** orthogonale aux bras d'isolation thermique **108,** ces derniers limitent la longueur géométrique des antennes **112a, 112c,** car ces antennes ne doivent pas traverser les bras **108** pour ne pas dégrader l'isolation thermique.

Avec la configuration proposée dans les deuxième et troisième variantes, les antennes dipolaires **112a, 112c** voient leur longueur électrique équivalente allongée par les branches des antennes perpendiculaires **112b, 112d** avec lesquelles elles sont en contact. Cette augmentation de la longueur électrique des antennes **112a, 112c** permet d'ajuster la fréquence de résonance des antennes **112a, 112c** à l'identique de celle des antennes **112b, 112d.** Ainsi par exemple, la longueur géométrique des antennes **112a, 112c** peut être plus faible que celle des antennes **112b, 112d** alors que la longueur d'onde de travail des antennes est identique. Le détecteur présente ainsi une sensibilité identique pour les deux polarisations orthogonales.

L'avantage de ce détecteur est qu'il permet donc de capturer le flux incident selon les deux polarisations en conservant de bonnes performances malgré la limitation induite par la présence des bras d'isolation thermique. Il est possible de capter des ondes de faible fréquence sans ajouter de masse calorifique et donc sans dégrader le temps de réponse du détecteur. En effet l'antenne de grande longueur nécessaire aux fréquences basses peut être fine et dépasser géométriquement de la planche bolométrique, qui reste alors de petite taille et présente en conséquence une capacité thermique raisonnable.

En termes d'absorption électromagnétique, pour chaque polarisation, cette configuration est équivalente à deux dipôles mis en parallèle, éloignés en distance d'un tiers de la taille du pixel, ou «*pitch*». Quand ces pixels sont intégrés sous forme d'un plan focal matriciel bidimensionnel, les antennes sont alors distribuées de manière plus dense et plus uniforme que dans le cas classique d'une antenne papillon, de sorte que le taux de remplissage optique effectif est supérieur. Ce phénomène permet à cette configuration des antennes d'obtenir une absorption spectrale très large bande.

Un avantage supplémentaire est que le taux d'absorption du détecteur dans la gamme spectrale infrarouge est petit. L'absorption dans l'infrarouge est proportionnelle à la taille des charges résistives qui sont très petite par rapport à la surface du détecteur.

Il va à présent être décrit en relation avec les figures 12 à 16, un procédé de fabrication du détecteur venant d'être décrit.

Comme illustré à la figure 12, un ensemble réflecteur **122, 126** du détecteur est formé du réflecteur **122,** disposé sur le circuit de lecture **124,** comme par exemple une couche d'aluminium, et de la couche **126** de matériau isolant. La couche **126** est par ailleurs traversée par les connexions électriques **128,** dans le prolongement des clous d'ancrage **106,** de manière à relier électriquement le circuit de lecture **124** et l'élément thermométrique **118.** Par exemple, des vias sont réalisés dans la couche **126** selon une technique usuelle, et les vias ainsi produits sont comblés par un métal comme le tungstène, l'aluminium ou le cuivre au moyen d'une technologie damascène associée à une technique de planarisation. Cet ensemble réflecteur forme une cavité résonnante avec les antennes **112.**

En se référant à la figure 13, une fois le support **102** fabriqué, une couche sacrificielle **130,** par exemple en polyimide, d'épaisseur comprise entre 0,5 micromètre et 5 micromètres est formée sur la couche **126,** et sert de support à la fabrication du micropont **104.** L'épaisseur de la couche sacrificielle **130** est choisie pour garantir à la fois une bonne tenue mécanique de la structure micropont et une isolation thermique efficace du micropont par rapport au support **102.** Notamment, si l'épaisseur est trop faible, une antenne dépassant de la membrane, telle qu'illustré précédemment à la figure 11, peut toucher la couche **126** une fois la couche sacrificielle **130** retirée, ce qui aurait pour conséquence de dégrader fortement l'isolation thermique entre le micropont **104** et le support **102.** Les clous d'ancrage **106** sont en outre réalisés dans le prolongement des vias **128** selon une technique usuelle.

La couche d'isolant **110** est alors déposée sur la couche sacrificielle **130,** puis un film métallique mince **132,** par exemple constitué de Ti, de TiN, de Pt, de NiCr ou autres, est déposée sur la couche d'isolant **110.** La couche **132** présente une conduction thermique faible en raison du fait de sa faible épaisseur. La couche d'isolant **110** et le film mince **132,** chacun d'une épaisseur comprise entre 0,005 micromètre et 0,05 micromètre, sont préférentiellement déposés par PECVD (selon l'expression anglo-saxonne « *Plasma Enhanced Chemical Vapor Deposition* ») ou pulvérisation cathodique.

La couche d'isolant **110** et le film mince **132** sont ensuite gravés chimiquement ou par plasma pour former les charges résistives **114a-114b** et les bras d'isolation thermique **108.** Le film mince **132** est donc utilisé à la fois pour réaliser lesdites charges et la couche conductrice des bras **108.**

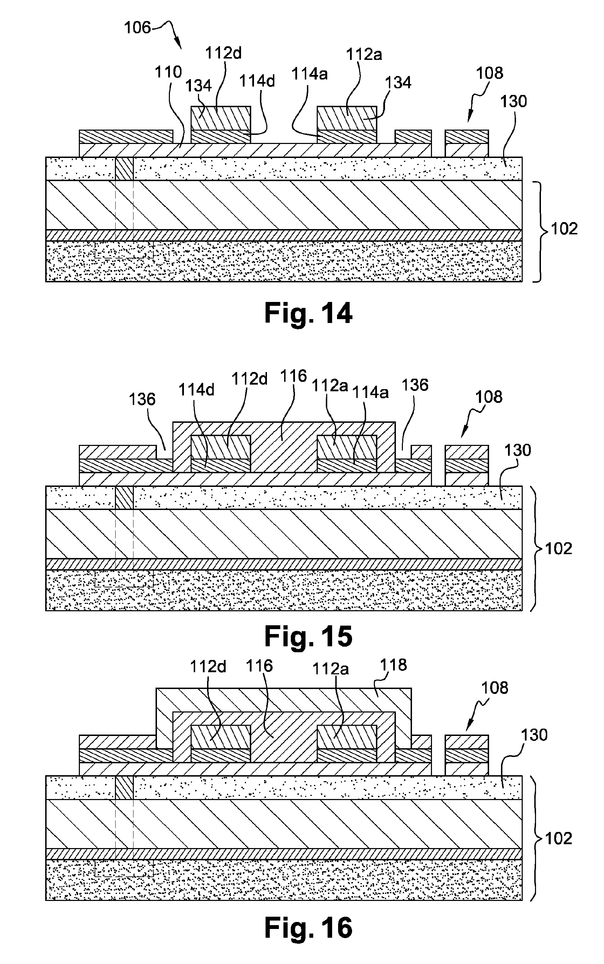

En se référant à présent à la figure 14, pour la formation des antennes **112a-112d,** une couche de matériau conducteur **134,** par exemple de l'aluminium, du siliciure de tungstène, du titane ou autres, d'une épaisseur comprise entre 0,1 micromètre à 0,5 micromètre, est déposée sur la portion centrale **105** du film métallique **132** par pulvérisation cathodique ou par décomposition thermique (LPCVD selon l'expression anglo-saxonne « *Low Pressure Chemical Vapor Deposition* ») ou la décomposition plasma (PECVD), puis les antennes sont formées par gravure chimique, gravure par plasma ou par une technique du type « *lift off* » de ladite couche. En variante, les antennes sont constituées de multicouches métalliques.

En se référant à présent à la figure 15, les antennes **112a-112d** et les charges résistives **114a-114d** sont ensuite recouvertes d'une couche de matériau isolant **116,** tel que du SiN, du SiO, du ZnS ou autres. La couche **116,** d'une épaisseur comprise entre 0,005 micromètre et 0,1 micromètre, est réalisée afin d'isoler électriquement les antennes et les charges résistive de l'élément thermométrique **118.** La couche **116** est par exemple réalisée à l'aide d'une technique de dépôt basse température telle que la pulvérisation cathodique ou la décomposition plasma (PECVD). La couche **116** est ensuite gravée, par exemple chimiquement ou par plasma, pour faire apparaître les parties latérales **136** du film métallique **132** auxquelles sera connecté l'élément thermométrique **118,** ainsi que les bras d'isolation thermique **108.**

En se référant à la figure 16, l'élément thermométrique **118** est alors déposé sur la couche **116** et les portions latérales **136,** à l'aide par exemple d'une technique de dépôt à basse température telle qu'une pulvérisation.

Enfin, la couche sacrificielle **130** est retirée, la nature de celle-ci déterminant la technique de libération, et de préférence par gravure chimique ou par plasma.

Comme on peut le constater, la gravure des matériaux constitutifs du détecteur selon l'invention est réalisée majoritairement ou exclusivement, par des techniques d'attaque chimique, éventuellement assistées par plasma, ces techniques permettant d'obtenir des gravures précises et reproductibles.

Il a été décrit des antennes dipolaires séparées ou connectées de type filaire, c'est-à-dire présentant une section, notamment une largeur, sensiblement constante, par exemple réalisées sous la forme de bandes ou de barreaux rectilignes. Les antennes dipolaires papillon peuvent être utilisées. De telles antennes comportent deux branches dont la largeur de chacune augmente à mesure que l'on s'éloigne de l'autre avec un angle d'ouverture de préférence compris entre 10° et 30°.

Les inventeurs ont observé que la densité de l'antenne sur le plan focal influence beaucoup le taux d'absorption du détecteur. Les configurations décrites ci-dessus utilisent deux antennes dipôles dans un élément unitaire de détection, ou «pixel», pour chaque polarisation, la distance entre deux dipôles étant de l'ordre de la moitié du « pitch » du pixel, ce qui est suffisant pour assurer une surface de réception équivalente du détecteur en gardant une capacité thermique raisonnable du détecteur. Les inventeurs ont en outre observé que l'utilisation de trois dipôles ou plus par polarisation n'augmente pas de manière sensible le taux d'absorption alors qu'elle pénalise au contraire fortement la capacité thermique de la structure suspendue.

A titre d'exemple numérique, la taille d'un micropont, et donc la valeur du pas du pixel ou « pitch » d'un détecteur matriciel à base de tels microponts, est comprise entre 20 micromètres et 200 micromètres, la longueur géométrique des antennes parallèle aux bras d'isolation thermique est comprise entre 20 micromètres et 200 micromètres, et la longueur géométrique des antennes perpendiculaires aux bras d'isolation thermique est comprise entre 10 micromètres et 70 micromètres.

L'invention permet notamment une première détection dans la gamme de 3 térahertz à 10 térahertz, notamment par le détecteur décrit en référence aux figures 9 et 10, et une deuxième détection dans la gamme de 0,3 térahertz à 6 térahertz, notamment par le détecteur décrit en référence à la figure 11.

## Revendications

1. Détecteur bolométrique d'un rayonnement électromagnétique térahertz, comprenant au moins un micropont bolométrique (104) suspendu au dessus d'un support (102) par des bras de soutien et d'isolation thermique (106, 108), le micropont comprenant:

   ■ des moyens (112) de collecte du rayonnement pour collecter le rayonnement électromagnétique;
   ■ des moyens résistifs (114), en couplage résistif avec les moyens de collecte, pour convertir la puissante électromagnétique collectée par ceux-ci en puissance calorifique; et
   ■ des moyens thermométriques (118), en couplage thermique avec les moyens résistifs, pour s'échauffer sous l'effet de la puissance calorifique produite par ceux-ci,

   *caractérisé*

   ■ **en ce que** les moyens de collecte (112) comprennent au moins une paire d'antennes (112a, 112b, 112c, 112d) ayant:

   ○ une première antenne (112a, 112c) apte à collecter le rayonnement selon un premier axe de polarisation; et
   ○ une deuxième antenne (112b, 112d) apte à collecter le rayonnement selon un deuxième axe de polarisation, différent du premier axe de polarisation;

   ■ en ce que les moyens résistifs (114) comprennent une charge résistive individuelle (114a, 114b, 114c, 114d) en couplage résistif avec chaque antenne (112a, 112b, 112c, 112d);
   ■ et en ce que les moyens thermométriques (118) sont électriquement isolés des moyens de collecte (112) et des moyens résistifs (114).

2. Détecteur bolométrique selon la revendication 1, *caractérisé* **en ce que** la première antenne (112a, 112c) et la deuxième antenne (112b, 112d) sont des antennes du type dipôle filaire.

3. Détecteur bolométrique selon la revendication 1 ou 2, *caractérisé* **en ce que** la première antenne (112a, 112c) et la deuxième antenne (112b, 112d) sont en contact électrique l'une avec l'autre.

4. Détecteur bolométrique selon la revendication 1, 2 ou 3, *caractérisé* **en ce que** la première antenne (112a, 112c) et la deuxième antenne (112b, 112d) comportent chacune deux portions en contact avec une charge résistive.

5. Détecteur bolométrique selon l'une quelconque des revendications précédentes, *caractérisé* **en ce que** chaque charge résistive (114a, 114b, 114c, 114d) a une valeur de résistance sensiblement égale à la valeur de l'impédance de l'antenne (112a, 112b, 112c, 112d) à laquelle elle est couplée pour une fréquence de résonnance de l'antenne.

6. Détecteur bolométrique selon l'une quelconque des revendications précédentes, *caractérisé* **en ce que** les longueurs des première et deuxième antennes (112a, 112b, 112c, 112d) selon leur axe de polarisation respectif sont sensiblement égales.

7. Détecteur bolométrique selon l'une quelconque des revendications précédentes, *caractérisé* **en ce que** le micropont (104) comporte une membrane suspendue au dessus du support par lesdits bras (106, 108), et **en ce qu'**au moins une antenne (112b, 112d) dont l'axe de polarisation ne traverse pas les bras d'isolation thermique (108), comporte une portion s'étendant hors de ladite membrane.

8. Détecteur bolométrique selon l'une quelconque des revendications précédentes, *caractérisé* **en ce que** la première et la deuxième antennes (112a, 112b, 112c, 112d) sont chacune déposées sur une couche résistive (114a, 114b, 114c, 114d), une antenne et la couche résistive sur laquelle elle est déposée étant encapsulée dans un matériau électriquement isolant (116), et **en ce que** les moyens thermométriques (118) comprennent un élément réalisé en matériau thermométrique déposé sur le matériau isolant d'encapsulation (116).

9. Détecteur bolométrique selon l'une quelconque des revendications précédentes, *caractérisé* **en ce que** le micropont (104) comporte deux paires d'antennes.

10. Détecteur bolométrique selon l'une quelconque des revendications précédentes, *caractérisé* **en ce que** les premier et deuxième axes de polarisation sont

17 EP 2 602 599 A1 18

perpendiculaires.

**Fig. 1**

Art Antérieur

**Fig. 2**

Art Antérieur

**Fig. 3**

Art Antérieur

**Fig. 4**
Art Antérieur

(A-A)
**Fig. 5**
Art Antérieur

**Fig. 6**

(B-B)

**Fig. 7**

**Fig. 8**

**Fig. 9**

**Fig. 10**

Fig. 11

Fig. 12

Fig. 13

**Fig. 14**

**Fig. 15**

**Fig. 16**

Europäisches
Patentamt

European
Patent Office

Office européen
des brevets

## RAPPORT DE RECHERCHE EUROPEENNE

Numéro de la demande

EP 12 19 4154

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2008/035847 A1 (HONDA HIROTO [JP] ET AL) 14 février 2008 (2008-02-14) * alinéas [0003], [0026] - [0032], [0039], [0041], [0043], [0053] * * figures 1,2A,4A * | 1-10 | INV. G01J5/20 G01J5/08 |
| | ----- | | |
| Y | US 6 329 655 B1 (JACK MICHAEL D [US] ET AL) 11 décembre 2001 (2001-12-11) * colonne 5, ligne 25 - ligne 29 * * colonne 8, ligne 39 - ligne 49 * * figure 4 * | 1-10 | |
| | ----- | | |
| Y | FR 2 788 129 A1 (COMMISSARIAT ENERGIE ATOMIQUE [FR]) 7 juillet 2000 (2000-07-07) * page 5, ligne 28 - page 6, ligne 25 * * figures 1,2 * | 1-10 | |
| | ----- | | |
| Y | EP 2 246 677 A1 (COMMISSARIAT ENERGIE ATOMIQUE [FR]) 3 novembre 2010 (2010-11-03) * alinéas [0042], [0044]; figure 5 * ----- | 8 | DOMAINES TECHNIQUES RECHERCHES (IPC) G01J |

Le présent rapport a été établi pour toutes les revendications

| Lieu de la recherche | Date d'achèvement de la recherche | Examinateur |
|---|---|---|
| Munich | 11 décembre 2012 | Jacquin, Jérôme |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 19 4154

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-12-2012

| Document brevet cité au rapport de recherche | | Date de publication | Membre(s) de la famille de brevet(s) | | Date de publication |
|---|---|---|---|---|---|
| US 2008035847 | A1 | 14-02-2008 | JP | 4221424 B2 | 12-02-2009 |
| | | | JP | 2008039684 A | 21-02-2008 |
| | | | US | 2008035847 A1 | 14-02-2008 |
| US 6329655 | B1 | 11-12-2001 | AUCUN | | |
| FR 2788129 | A1 | 07-07-2000 | DE | 69904086 D1 | 02-01-2003 |
| | | | DE | 69904086 T2 | 09-10-2003 |
| | | | EP | 1147389 A1 | 24-10-2001 |
| | | | FR | 2788129 A1 | 07-07-2000 |
| | | | US | 7030453 B1 | 18-04-2006 |
| | | | WO | 0040937 A1 | 13-07-2000 |
| EP 2246677 | A1 | 03-11-2010 | AT | 509258 T | 15-05-2011 |
| | | | EP | 2246677 A1 | 03-11-2010 |
| | | | FR | 2945119 A1 | 05-11-2010 |
| | | | JP | 2010261935 A | 18-11-2010 |
| | | | US | 2010276597 A1 | 04-11-2010 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060231761 A
- US 2010276597 A